# EUROPÄISCHE PATENTSCHRIFT

(11) **EP 0 843 092 B1**
(45) Veröffentlichungstag und Bekanntmachung des Hinweises auf die Patenterteilung: **31.01.2001**
(21) Anmeldenummer: 97119814.8
(22) Anmeldetag: 12.11.1997
(51) Int. Cl.: F03B 1/00, F03B 1/02

(54) **Peltonrad-Vorspannung**
Pretensioning Peltonwheel
Prétension de rotor de turbine Pelton

(30) Priorität: 13.11.1996 AT 198296
(43) Veröffentlichungstag der Anmeldung: 20.05.1998
(73) Patentinhaber: Turbinen- und Kraftwerksanlagenbau EFG Energieforschungs- und Entwicklungsgesellschaft m.b.H. & Co KG, 9560 Feldkirchen (AT)
(72) Erfinder: Buchelt, Benno, 9063 Maria Saal (AT)
(74) Vertreter: Schubert, Siegmar, Dipl.-Ing.

(56) Entgegenhaltungen:
- AT-A- 380 078
- CH-A- 152 332
- DE-A- 3 938 357
- FR-A- 436 127
- GB-A- 174 768

## Beschreibung

Die Erfindung betrifft generell Wasserturbinen-Laufräder vom Typ Pelton und deren Vorspannung und bezieht sich konkret auf ein Peltonrad nach dem Oberbegriff des Anspruchs 1.

Bei einem derartigen bekannten Peltonrad (AT 394 093 bzw. DE-A-3938357) ist ein formschlüssiger Radverband aus segmentartigen Becherfüßen und über die Schultern der Füße übergreifende Radscheiben zusammengefügt, in welchem an einer oder mehreren Stellen am Umfang des Schaufelsternes zwischen jeweils zwei benachbarte Segmentfüße Kegelhülsen in der äußeren Gestalt von Kegelstümpfen mittels Schrauben-Zuganker axial eingepreßt werden und wodurch mittels Kraftumlenkung die Segmentfüße in Umfangsrichtung gegen Drehmoment übertragende Bolzen zusammengepreßt werden und auch radial nach außen gegen die Schultern der Seitenscheiben gedrängt werden, so daß ein beabsichtigter räumlicher Vorspannungszustand erzeugt wird. Dabei rufen die verschieden großen Durchmesser des Kegelstumpfes einer solchen Kegelhülse bei axialem Einpressen in die Hohlkegelform zwischen den benachbarten Segmentfüßen übergroße Dehnungen im Bereich des kleineren Kegelstumpfdurchmessers hervor, welche zwar bisher durch Reiben der Kegelbohrungen im vorgespannten Zustand der Schaufeln beseitigt wurden und dies mittels besonderer Spannvorrichtungen. Dadurch war ein erhöhter Bearbeitungsaufwand notwendig.

Der vorliegenden Erfindung liegt die Aufgabe zugrunde, den gleichen räumlichen Spannungszustand mit geringerem Arbeitsaufwand zu erreichen.

Diese Aufgabe wird durch ein Peltonrad mit den in dem Anspruch 1 angegebenen Merkmalen gelöst.

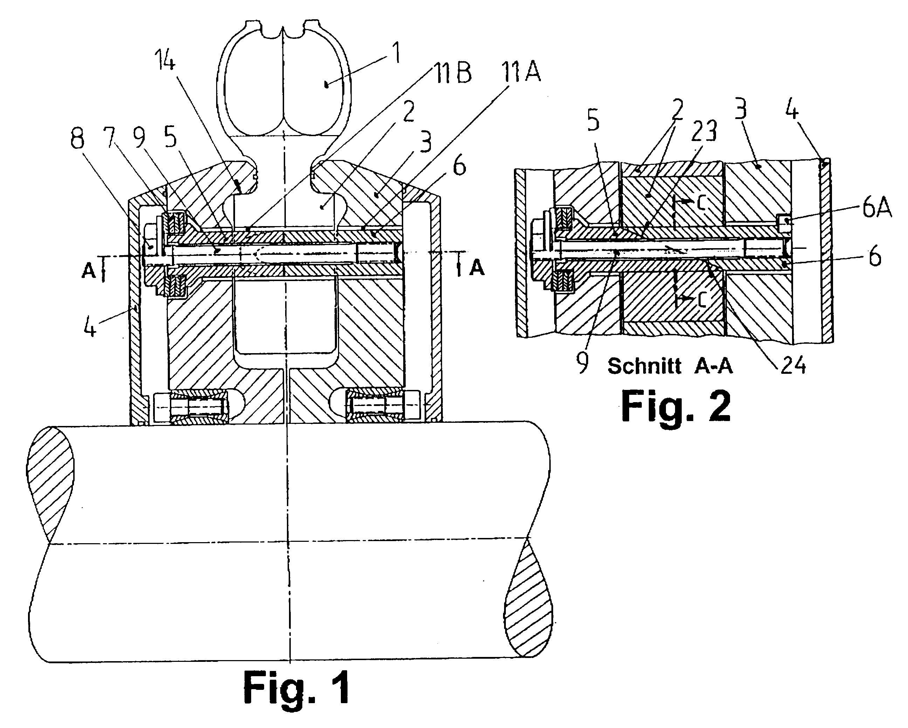

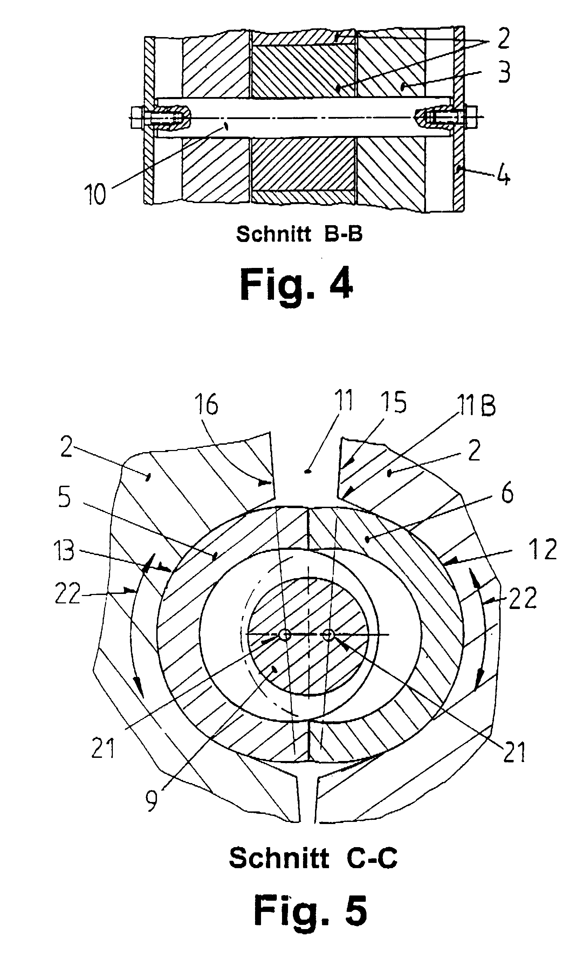

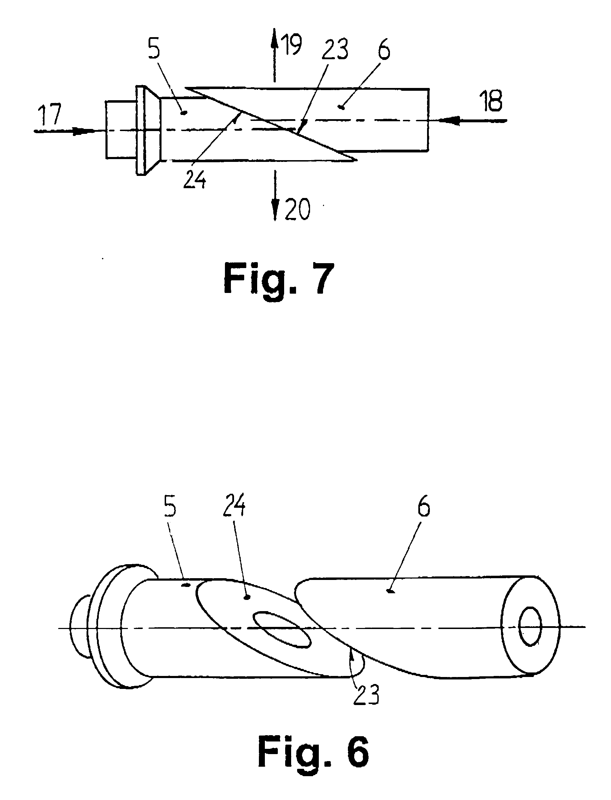

In der vorliegenden Erfindung werden anstelle der obigen bekannten Kegelhülsen Spannzylinder angewendet, die in den Fig. 1, 2, 5, 6 und 7 zu sehen sind und die mittels ebenen Schnittflächen schräg zur Zylinderachse keilförmig angeschnitten sind, gemäß Schnitt A-A der Fig. 2, und die mittels Zuganker axial gegeneinander gepreßt werden, wodurch gemäß Fig. 7 das axiale Abschieben in einer Verdrängung in Umfangsrichtung umgesetzt wird und eine übertrieben groß gezeichnete Bewegungskinematik nach Fig. 5 in Gang gesetzt wird.

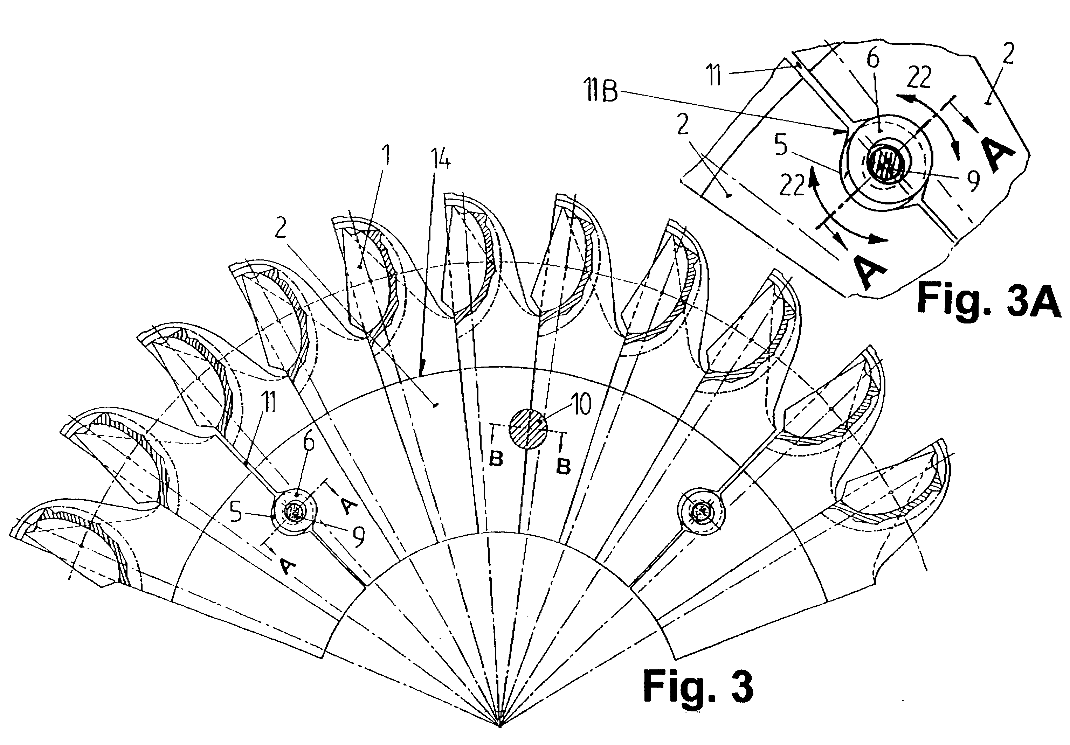

Gemäß Fig. 3A und deren die Spannbewegungen übertreibende Vergrößerung in Fig. 5 entsteht zwischen den benachbarten Schaufelfüßen ein Spalt, während die Radialflanken der Schaufelfüße eine Drehbewegung um die Mittelpunkte der gegeneinander abschiebenden Zylinder vollführen, wobei diese Mittelpunkte der Halbbohrungen in Fig. 5 vorzugsweise in den Ebenen der radialen Fußflanken liegen.

In letzterer Bewegungskinematik, die sich im Zehntelmillimeterbereich abspielt, besteht auch der wesentliche Unterschied zu bekannten Klemmbefestigungen von Fahrradlenkern im Lenksäulenrohr, wo die Spanndeformationen eine mehr linienartige Berührung der aufeinandergepreßten Flächen verursachen, während im Gegensatz dazu bei der gegenständlichen Erfindung selbst bei vorausgesetzter Starrheit der beteiligten Körper der absolute Formschluß aller kraftübertragenden Flächen gegeben ist.

Fig. 1 zeigt einen typischen Radialschnitt einer erfindungsgemäßen Peltonturbine mit Becher 1, Becherfuß 2, übergreifenden Seitenscheiben 3, Zylinderhülsen 6 und 6, Zuganker 9 und Tellerfedern 7, die für eine gewünscht flache Federkennlinie des Systems "Zuganker + Tellerfedern" sorgen.

Die Spannelemente selbst übertragen kein Drehmoment (das machen die Bolzen 10). Sie sind daher deshalb in den Seitenscheiben 3 mit einer Spielbohrung 11A umgeben, damit sich ihre Position beim Vorspannen ohne Behinderung frei einstellen kann.

Es ist besonders darauf hinzuweisen, daß die Ausschrägung 11B der Halbbohrungen 12 und 13 in den Becherfüßen 2 deutlich definiert in Fig. 3A und in Fig. 5 in der Fig. 1 in der üblichen zeichnerischen Darstellung ähnlich aussieht wie eine Spielbohrung, in Wahrheit jedoch eben nur die Ausschrägung darstellt.

Fig. 2 zeigt den Schnitt A-A, der sowohl in Fig. 1 als auch in den Fig. 3 und 3A markiert ist und in welchem man die Keilflächen 23 und 24 der Spannzylinder 5 und 6 sieht, die mittels Lagesicherung 6A so ausgerichtet sind, daß sie eine radiale Linie durch die Turbinenachse beinhalten.

Fig. 3 zeigt ein typisches Segment des Schaufelsternes ohne Seitenscheiben: An mindestens zwei bis sechs Stellen am Umfang sitzen die Spannzylinder, die selber wegen der Zylinderspalte 11A in den Seitenscheiben kein Drehmoment übertragen können. Dies besorgen vielmehr die Drehmomentbolzen 10, zu sehen im Schnitt B-B der Fig. 4, die sich immer möglichst in der Mitte zwischen zwei benachbarten Zylinder-Spannhülsen befinden und gegen welche von beiden Seiten her die Becherfüße 2 angepreßt werden, so daß in der Radialebene durch die Zylinderspannhülsen ein radialer Vorspannspalt 11 entsteht.

Fig. 3A ist ein heraus vergrößertes Detail der Fig. 3 und zeigt ein übertrieben gezeichnetes Abschieben der Zylinderhülsen 5 und 6, das sich bei konkreten Ausführungen im Zehntelmillimeterbereich abspielt. Ebenso ist Spalt 11 übertrieben groß gezeichnet, der in Wirklichkeit beispielsweise bei Becherbreite 240 mm nur etwa 0,15 mm beträgt.

Fig. 4 zeigt den in Fig. 3 markierten Umfangsschnitt B-B, der den Drehmomentbolzen 10 zeigt, der in einer formschlüssigen Bohrung etwa in der Mitte eines Schaufelsternsegmentes zwischen zwei benachbarten Zylinderhülsen 5 und 6 angeordnet ist. Drehmomentbolzen 10 überträgt das Drehmoment in die Seitenscheiben 3, von wo es über Mitnehmerverbindungen in die Welle gelangt (siehe Fig. 1).

An diesen Drehmomentbolzen 10 werden von beiden Seiten her die Becher eines Schaufelsegmentes, das beispielsweise in Fig. 1 aus 7 Schaufeln besteht, durch die benachbarten Spannhülsen angepreßt.

Fig. 5 stellt den in Fig. 2 markierten Schnitt C-C durch die axiale Mitte der benachbarten Becherfüße 2 dar, zwischen welchen die Zylinderhülsen 5 und 6 ihre in Fig. 7 übertrieben gezeigten Verdrängungswege ausführen, so daß ein übertrieben groß gezeichneter Radialspalt 11 zwischen den Flanken 15 und 16 entsteht.

Dabei drehen entsprechend der klar vorgegebenen Bewegungskinematik die Becherfüße 2 mittels Drehbewegung 22 relativ zu den Hülsen 5 und 6 um die Mittelpunkte 21 der Halbbohrungen 12 und 13, wobei diese Mittelpunkte 21 in den Ebenen der Radialflanken 15 und 16 liegen.

Fig. 6 ist eine halbschematische Schrägrißansicht der Zylinderhülsen 5 und 6 mit den typischen Keilflächen 23 und 24.

Fig. 7 zeigt übertrieben das Abschieben der durch den Schraubenzuganker 9 zusammengepreßten Zylinderhülsen 5 und 6, wodurch im Peltonrad der räumliche Vorspannungszustand entsteht. Die axialen Verschiebungen 17, 18 lösen kinematisch bedingt durch die Keilflächen 23 und 24 die Verschiebungen 19 und 20 in Umfangsrichtung aus. Dazu müssen die Keilflächen 23 und 24 eine räumliche Lage derart einnehmen, daß sie eine radiale Linie normal zur Turbinenachse und senkrecht zur Turbinenachse beinhalten. Dadurch ist auch die Drehlage der Zylinderhülsen 5 und 6 bei der Montage definiert (siehe auch Fig. 2 und Beschreibung der Fig. 2).

## Patentansprüche

1. Peltonrad bestehend aus einzelnen Bechern mit segmentartigen Füßen, die zylindrische Schultern aufweisen, wobei die Becher durch Seitenscheiben, welche über diese zylindrischen Schultern der Segmentfüße greifen, zu einem formschlüssigen Radverband zusammengefügt sind,
**dadurch gekennzeichnet,**
daß an einer oder mehreren Stellen der Umfangsrichtung des Peltonrades zwischen jeweils angrenzenden Radialflanken (15, 16) der Becherfüße (2) zwei Zylinderhülsen (5, 6) mit keilförmigen ebenen Trennflächen (23, 24) angeordnet sind, mit einer räumlichen Lage der Trennflächen, die so ist, daß sie eine radiale Linie normal zur Turbinenachse und durch die Turbinenachse beinhalten, wobei die Längsachsen (21) der Zylinderhülsen (5, 6) parallel zur Turbinendrehachse gerichtet sind, und daß mittels Schraubenzuganker (9) eine erste Teilverschiebung (17, 18) der Zylinderhülsen (5, 6) entlang der keilförmigen ebenen Trennflächen (23, 24) in Richtung der Turbinendrehachse erfolgt, wodurch eine zweite Teilverschiebung (19, 20) in Umfangsrichtung des Radverbandes ausgelöst wird, so daß die Becherfüße (2) in der Umfangsrichtung des Radverbandes von den Zylinderhülsen (5, 6) weg zu den Drehmomentbolzen (10) gepreßt werden und gleichzeitig infolge der Segmentwinkel der Becherfüße (2) die Schaufeln auch radial nach außen gegen die Schultern (14) der Radscheiben (3) gepreßt werden.

2. Peltonrad nach Anspruch 1,
**dadurch gekennzeichnet,**
daß die Halbbohrungen (12, 13) in den Segmentfüßen (2) Mittellinien (21) aufweisen, die vorzugsweise in den Ebenen der Radialflanken (15, 16) der Segmentfüße (2) liegen.

## Claims

1. Pelton wheel consisting of individual buckets with segment-like feet which have cylindrical shoulders, the buckets being joined into a positive wheel unit by lateral disks which engage over these cylindrical shoulders of the segment feet, characterized in that at one or more points of the peripheral direction of the Pelton wheel between mutually adjoining radial flanks (15, 16) of the bucket feet (2) two cylinder sleeves (5, 6) with wedge-shaped flat separating surfaces (23, 24) are arranged, with a spatial position of the separating surfaces which is such that they include a radial line normal to the turbine axis and through the turbine axis, the longitudinal axes (21) of the cylinder sleeves (5, 6) being aligned parallel to the turbine axis of rotation, and in that by means of screw tension rods (9) a first partial displacement (17, 18) of the cylinder sleeves (5, 6) along the wedge shaped flat separating surfaces (23, 24) in the direction of the turbine axis of rotation takes place, by which means a second partial displacement (19, 20) in the peripheral direction of the wheel unit is triggered, so that the bucket feet (2) are pressed in the peripheral direction of the wheel unit away from the cylinder sleeves (5, 6) to the torque bolts (10) and at the same time as a result of the segment angles of the bucket feet (2) the buckets are also pressed radially outwards against the shoulders (14) of the wheel disks (3).

2. Pelton wheel according to Claim 1, characterized in that the half-bores (12, 13) in the segment feet (2) have centre lines (21) which preferably lie in the planes of the radial flanks (15, 16) of the segment feet (2).

## Revendications

1. Roue Pelton constituée d'augets individuels munis de pieds configurés en secteurs, qui présentent des épaulements cylindriques, les augets étant alors réunis en un assemblage mécanique en forme de roue, par des flasques latéraux qui s'accrochent par-dessus lesdits épaulements cylindriques des pieds en forme de secteurs, caractérisée en ce que,
en un ou plusieurs emplacements de la roue Pelton dans la direction circonférentielle de celle-ci, sont disposés, entre des flancs radiaux adjacents respectifs (15, 16) des pieds d'auget (2), deux manchons cylindriques (5, 6) ayant des surfaces de joint planes (23, 24) en forme de coin, selon un positionnement dans l'espace des surfaces de joint qui est tel, que celles-ci contiennent une ligne radiale normale à l'axe de la turbine et passant par l'axe de la turbine, les axes longitudinaux (21) des manchons cylindriques (5, 6) étant alors dirigés parallèlement à l'axe de rotation de la turbine, et que, au moyen de tirants à vis (9), un premier coulissement partiel (17, 18) des manchons cylindriques (5, 6) s'effectue, le long des surfaces de joint planes (23, 24) en forme de coin, dans la direction de l'axe de rotation de la turbine, ce qui a pour effet de déclencher un second coulissement partiel (19, 20) dans la direction circonférentielle de l'assemblage en forme de roue, en sorte que les pieds d'auget (2), écartés par les manchons cylindriques (5, 6), sont repoussés dans la direction circonférentielle de l'assemblage en forme de roue. vers les goujons applicateurs de couple de rotation (10), et que, dans le même temps, les aubes. en raison de la forme en secteur angulaire des pieds d'auget (2), sont également repoussées radialement vers l'extérieur, contre les épaulements (14) des flasques de roue (3).

2. Roue Pelton selon la revendication 1, caractérisée en ce que
les demi-forures (12, 13), dans les pieds en forme de secteurs (2), présentent des axes centraux (21) qui, de préférence, sont situés dans les plans des flancs radiaux (15, 16) des pieds en forme de secteurs (2).
